# EUROPEAN PATENT SPECIFICATION

(11) **EP 2 029 427 B1**
(45) Date of publication and mention of the grant of the patent: **04.11.2009**
(21) Application number: 07728935.3
(22) Date of filing: 09.05.2007
(51) Int. Cl.: B64C 9/32, B64C 9/36

(54) **METHOD OF AND APPARATUS FOR PRODUCING AERODYNAMIC RESISTANCE ON AN AIRCRAFT**
VERFAHREN UND VORRICHTUNG ZUM ERZEUGEN EINES AERODYNAMISCHEN WIDERSTANDS AN EINEM FLUGZEUG
PROCÉDÉ ET APPAREIL PERMETTANT DE PRODUIRE UNE RÉSISTANCE AÉRODYNAMIQUE SUR UN AÉRONEF

(30) Priority: 31.05.2006 DE 102006025752
(43) Date of publication of application: 04.03.2009
(73) Proprietor: Airbus Deutschland GmbH, 21129 Hamburg (DE)
(72) Inventor: MERTOL, Anil, B., 28201 Bremen (DE); CLEEMANN, Volker, 21698 Ohrensen (DE); WEBER, Carsten, 28205 Bremen (DE); FISCHER, Markus, 28844 Weyhe (DE)
(74) Representative: Eisenführ, Speiser & Partner
(86) International application number: PCT/EP2007/054483
(87) International publication number: WO 2007/137935

(56) References cited:
- US-A- 2 549 020
- US-A- 2 698 149
- US-A- 4 165 849
- US-A- 4 372 507

## Description

The invention relates to an aircraft and to a method of producing aerodynamic resistance on an aircraft, with at least one braking flap, wherein the at least one braking flap can be extended into the airflow around the aircraft and is arranged on the fuselage in a region over the wings.

In the landing approach of an aircraft its speed is reduced to the lowest possible value in order to restrict the required length of the landing runway. Furthermore, in order to reduce the flight noise on the ground, it is desirable to minimise as much as possible the noise-polluted area, by virtue of a steep landing approach. A high lift coefficient is required for that purpose in order to be able to provide for a slow approach. In order to achieve an approach flight path which is steep and slow, besides the high-lift systems required for that purpose, there is also a need for effective braking apparatuses. In the ideal situation those braking apparatuses increase exclusively the air resistance of the aircraft and do not influence either the lift or the pitching, rolling or yawing moment of the aircraft. In addition, in order further to limit the noise pollution, the braking apparatuses should cause as little additional source noise as possible.

For effectively reducing the flight speed of an aircraft in the landing approach use is usually made of braking flaps which are arranged substantially in the region of the trailing edge of an aircraft wing (hereinafter those braking flaps are also referred to as "spoilers"). By virtue of their position directly on the aircraft wing, extended spoilers decisively influence the flow around the wing and consequently reduce the lift-increasing action of the wing trailing edge flaps (landing flaps) and the wing leading edge flaps (slats). In most cases, with the spoilers extended, the longitudinal moment budget of the aircraft changes, whereby it is necessary to continuously compensate in particular for an altered pitching moment by means of the elevator unit. The flight noise is also markedly increased due to the reduced lift and the higher landing speed that this entails as the aircraft cell noise increases exponentially with the flight speed. In addition the source noise produced by the extended spoilers is amplified.

As an alternative arranged at the underside of the aircraft fuselage are braking flaps which can be extended into the airflow around the aircraft ("ventral airbrake"). Due to geometrical limitations (that is to say the width of the aircraft fuselage, the minimum distance of the aircraft fuselage from the ground and the installation situation of the undercarriage), the extended size and therewith also the action of a ventral airbrake are restricted. In many cases, it is not possible to produce sufficient air resistance with such braking flaps, so that the use thereof is limited. Furthermore, it is necessary to reckon on detrimental noise emission in the direction of the ground as the noise generated by the ventral airbrake is not screened either by the aircraft fuselage or the wings.

So-called "petal airbrakes" are usually arranged at the tail of the aircraft and can be pivotably extended sideways in the direction of flight on each side of the aircraft. A disadvantage with that kind of apparatus is the effect of the limited installation volume available in the fuselage tail region (that is to say limitation due to system installations such as the auxiliary power unit - APU - , tail unit mounting to the fuselage etc.). A further disadvantage is that this kind of apparatus is arranged in flow-mechanical regions of low kinetic energy. For those aforementioned reasons the implementation of resistance by the petal airbrakes is limited.

A further possible way of producing resistance is the so-called split rudder. A disadvantage with that kind of apparatus is the limited installation space available as well as the restricted capability for carrying structural air loads in the rudder assembly region.
It is also found when using that apparatus that the yaw-stabilising action of the rudder assembly is markedly reduced. For the aforementioned reasons that kind of apparatus can afford only a low level of potential resistance implementation.

Each of the documents US-A-4 165 849 and US-A-2 549 020 discloses an aircraft with two braking flaps arranged on the fuselage in a region over the wings.

Therefore the object of the invention is to reduce or eliminate one or more of the above-discussed problems of known solutions. In particular the object of the invention is to provide an apparatus for producing aerodynamic resistance on an aircraft, which does not reduce the lift, which causes less noise and which does not exert an additional moment on the aircraft.

That object is attained by the characterizing features of claim 1.

Those braking flaps (dorsal airbrakes) are arranged within a region on the aircraft fuselage, in which a high dynamic pressure in respect of the airflow obtains. In the case of conventional commercial aircraft a suitable area of high dynamic pressure for mounting these apparatuses is to be found for example over the low-pressure side of the aircraft wings, near the fuselage, being the side on which the airflow is accelerated. Arranging the braking flaps on the fuselage in that region reduces the dynamic pressure of the airflow. The energy applied for that purpose is taken from the kinetic energy of the aircraft.

Altering the distribution of pressure specifically at the wing in a high-lift configuration by means of that kind of apparatus causes a down-pitching moment (negative pitching moment contribution). The afflux flow in relation to the braking flaps additionally causes an up-pitching moment (positive pitching moment contribution). Those two pitching moment contributions balance out by virtue of a suitably selected exact positioning of the braking flaps on the aircraft. In addition the induced resistance of the aircraft can also be increased by ideal positioning of the braking flaps on the aircraft, which in combination with the above-described increase in pressure resistance leads to a further increase in braking action. The braking action of the dorsal airbrakes influences the flow around the wings and thus the high-lift flaps markedly less than a conventional spoiler arrangement. The change in pressure distribution can accordingly both increase the resistance and also reduce the loss of lift.

The noise production of such braking flaps is also substantially less in comparison with known solutions as the wings and the aircraft fuselage screen towards the ground the noise resulting from the braking flaps. Replacement of the spoilers mounted on the wings and advantageously influencing the flow around the wing leading edge flaps (slats) means that it is possible to reduce the overall noise of the aircraft by the dorsal airbrakes.

Preferably two, three, four or more braking flaps which are spaced from each other in the peripheral direction are arranged on the fuselage of the aircraft in a region over the wings of the aircraft. Due to the spherical curvature of the aircraft fuselage it is geometrically advantageous to use a plurality of smaller braking flaps which are arranged in a row over a cross-sectional section in the region of the top side of the aircraft fuselage. Furthermore, when using in particular two braking flaps or two pairs of braking flaps, it is possible for the eddy turbulence wake thereof to be so directed, by virtue of a suitable spacing between the braking flaps, that disruption of the rudder assembly which is arranged towards the tail, by virtue of air eddies, can be reduced or avoided.

It is preferable if the braking flaps are arranged symmetrically relative to each other in the peripheral direction relative to the central plane of the fuselage. That eliminates additional pitching, rolling or yawing moments which could arise due to asymmetrical braking forces.

In an advantageous embodiment the ends of the braking flaps, which face away from the fuselage of the aircraft, have a straight edge. Manufacture or machining of the braking flaps and in particular the connecting portions which seal off flush in the aircraft fuselage for retracted braking flaps can be effected relatively inexpensively as a result.

In a further preferred feature moreover serrated, profiled, perforated or rounded-off edges are provided at the ends of the braking flaps, which face away from the aircraft fuselage. By virtue thereof, with a suitable design, it is possible both to improve the dynamic action and also reduce the generation of noise.

It is particularly favourable if the at least one braking flap is of a substantially rectangular shape. Manufacture of the braking flap and the sealing regions in the aircraft fuselage is simplified thereby and the braking characteristics of rectangular flaps are known.

In a particularly preferred embodiment the two, three or more braking flaps are drivable independently of each other. That permits integration of the braking flaps into the flight attitude regulation of the aircraft in the landing approach or in other phases and can be used to optimise the moment budget of the aircraft.

The object of the invention is further attained by a method of producing aerodynamic resistance on an aircraft as defined in claim 8.

A particularly preferred embodiment is designed in accordance with the above-described features of the apparatus for producing resistance on an aircraft.

The invention will be described in greater detail hereinafter by means of an embodiment by way of example with reference to the Figures. The same references are used in the specific description hereinafter for the same or similar elements. In the drawing:
- Figure 1: shows a perspective view of an aircraft with braking flaps according to the present invention, and
- Figure 2: shows the dynamic pressure distribution on an aircraft fuselage.

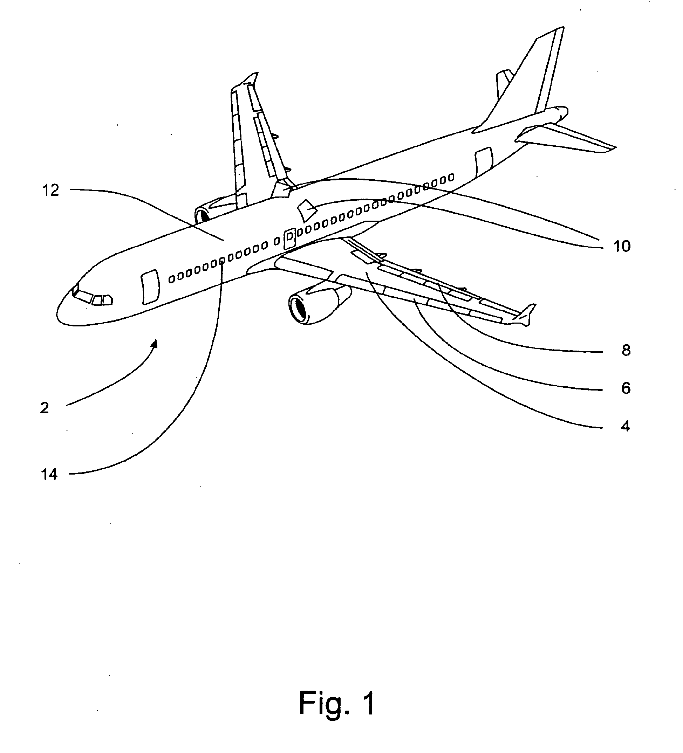

Figure 1 shows an aircraft 2 with two wings 4 which are equipped with wing leading edge flaps 6 (slats) and wing trailing edge flaps 8 (flaps). In the landing approach both the flaps 8 and also the slats 6 are extended and provide a lift coefficient which is greatly increased in comparison with cruising flight and which permits a major reduction in the flight speed during the landing approach.

In the landing approach, in addition to the reduction in thrust and to the increased overall air resistance of the aircraft due to extended slats 6 and flaps 8, it is necessary to further reduce the speed of the aircraft 2 by means of braking flaps or to keep it constant in consideration of the permanent descending flight. That is effected in the present case by two braking flaps 10 which are disposed in a region of the aircraft fuselage 12 which is over a plane defined by the wings 4.

The braking flaps 10 are of such a configuration that, in their position of maximum extension, they are approximately perpendicularly to the surface of the aircraft fuselage 12. The area and the outward extension of the braking flaps 10 is limited by the required braking efficiency or the required air resistance, the available space on the aircraft fuselage and the curvature thereof, and the necessary actuator power. An instantaneous braking action can be influenced by varying the angle of pivotably extended braking flaps 10.

The geometrical configuration of the edges of the braking flaps 10 depends in particular on the requirements in regard to the noise which occurs. The general geometry of the braking flaps 10 can be rectangular or can assume any suitable shape.

It is possible, in place of a pair of braking flaps consisting of two braking flaps 10, also to use only one or even more braking flaps 10 which for example can be arranged above the windows 14 over the wings.

A plurality of braking flaps 10 could additionally contribute to stabilising the moment budget of the aircraft insofar as they are preferably drivable separately from each other and are integrated into the flight attitude regulation during the landing approach or other phases.

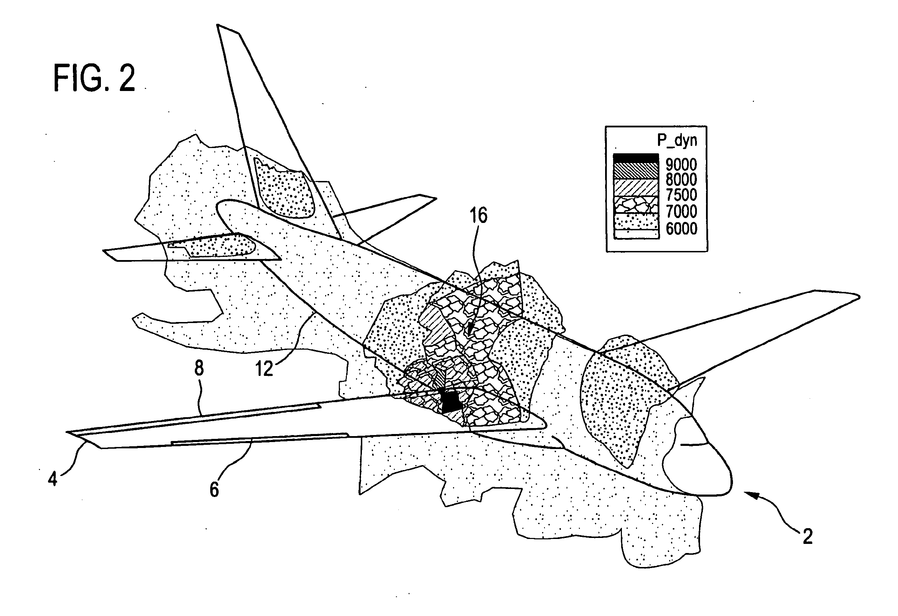

The position of the new braking flaps 10 on the top side of the fuselage is defined inter alia by the distribution of the dynamic pressure at the fuselage, as is shown in Figure 2.

It is clearly apparent in Figure 2 that a local maximum in respect of dynamic air pressure is to be found in a region 16 of the aircraft 2. The braking flaps 10 should preferably be arranged in that region 16 and should be of such a configuration that they make the most effective possible use of that dynamic pressure and provide an optimum braking action. The preferred location in that region 16 is accordingly a location 18 at which the local dynamic pressure is at a maximum. There the so-called overspeed, that is to say an airflow speed which exceeds the afflux flow speed of the aircraft, reaches its local maximum. Arranging the braking flaps 10 in the region 16 at the top side of the aircraft fuselage 12 causes a reduction in noise on the ground as the braking flaps 10 are disposed over the wings 4 and the aircraft fuselage 12 which screen the noise produced, towards the ground. If in an aircraft configuration the spoilers mounted on the wings 4 are dispensed with, the noise caused by the flaps 8 and the slats 6 can also be reduced by an improvement in the flow conditions at the wings 4.

The present invention provides braking flaps which provide a braking action similar in comparison with conventional spoilers mounted to the wings 4, but in that case they do not disrupt the moment budget of the aircraft and they generate substantially less noise in the landing approach. The embodiment used serves only for the purposes of description of the present invention and is not intended to restrict it to that embodiment. In particular the invention relates to a passenger aircraft.

## Claims

1. An aircraft comprising at least one braking flap,
wherein the at least one braking flap can be extended into the airflow around the aircraft and is arranged on the fuselage of the aircraft in a region (16) over the wings of the aircraft,
**characterised in that** said region (16) is one in which a local maximum in respect of dynamic air pressure is present, and **in that** the at least one braking flap is positioned for balancing out a down-pitching moment and an up-pitching moment produced by the at least one braking flap*.*

2. The aircraft according to claim 1 **characterised in that** two, three, four or more braking flaps spaced from each other in the peripheral direction are arranged on the fuselage of the aircraft in a region over the wings of the aircraft.

3. The aircraft according to claim 2 **characterised in that** the braking flaps are arranged in mutually symmetrical relationship in the peripheral direction relative to the central plane of the fuselage.

4. The aircraft according to one of claims 2 and 3 **characterised in that** the ends of the braking flaps, which face away from the fuselage of the aircraft, have a straight edge.

5. The aircraft according to one of claims 2 and 3 **characterised in that** the ends of the braking flaps, which face away from the fuselage of the aircraft, have a serrated, profiled, perforated or rounded-off edge.

6. The aircraft according to one of the preceding claims **characterised in that** the at least one braking flap is of a substantially rectangular shape.

7. The aircraft according to one of preceding claims 2 to 6 **characterised in that** the braking flaps are drivable independently of each other.

8. A method of producing aerodynamic resistance on an aircraft, wherein at least one braking flap arranged on the fuselage of the aircraft in a region (16), in which a local maximum in respect of dynamic air pressure is present, over the wings of the aircraft is extended into the airflow around the aircraft, wherein the at least one braking flap is positioned for balancing out a down-pitching moment and an up-pitching moment produced by the at least one braking flap.

## Patentansprüche

1. Flugzeug mit mindestens einer Bremsklappe,
wobei die mindestens eine Bremsklappe in den das Flugzeug umgebenden Luftstrom auslenkbar ist und wobei die mindestens eine Bremsklappe am Rumpf des Flugzeugs in einem Bereich (16) über den Flügeln des Flugzeugs angeordnet ist,
**dadurch gekennzeichnet, dass** der Bereich (16) ein Bereich ist, in dem sich ein lokales Maximum des dynamischen Luftdrucks befindet, und dass die mindestens eine Bremsklappe positioniert ist, um ein abnickendes Moment und ein aufnickendes Moment, die von der mindestens einen Bremsklappe erzeugt werden, auszugleichen.

2. Flugzeug nach Anspruch 1, **dadurch gekennzeichnet, dass** zwei, drei, vier oder mehr in Umfangsrichtung voneinander beabstandete Bremsklappen am Rumpf des Flugzeugs in einem Bereich über den Flügeln des Flugzeugs angeordnet sind.

3. Flugzeug nach Anspruch 2, **dadurch gekennzeichnet, dass** die Bremsklappen in Umfangsrichtung zueinander symmetrisch zur Rumpfmittelebene angeordnet sind.

4. Flugzeug nach einem der Ansprüche 2 oder 3, **dadurch gekennzeichnet, dass** die vom Rumpf des Flugzeugs weg weisenden Enden der Bremsklappen eine gerade Kante aufweisen.

5. Flugzeug nach einem der Ansprüche 2 oder 3, **dadurch gekennzeichnet, dass** die vom Rumpf des Flugzeugs weg weisenden Enden der Bremsklappen eine gezackte, profilierte, perforierte oder abgerundete Kante aufweisen.

6. Flugzeug nach einem der vorhergehenden Ansprüche, **dadurch gekennzeichnet, dass** die mindestens eine Bremsklappe eine im Wesentlichen rechteckige Form aufweist.

7. Flugzeug nach einem der vorhergehenden Ansprüche 2-6, **dadurch gekennzeichnet, dass** die Bremsklappen unabhängig voneinander antreibbar sind.

8. Verfahren zum Erzeugen von aerodynamischem Widerstand an einem Flugzeug, wobei mindestens eine Bremsklappe, die am Rumpf des Flugzeugs in einem Bereich (16), in dem sich ein lokales Maximum des dynamischen Luftdrucks befindet, über den Flügeln des Flugzeugs angeordnet ist, in den das Flugzeug umgebenden Luftstrom ausgelenkt wird, wobei die mindestens eine Bremsklappe positioniert ist, um ein abnickendes Moment und ein aufnickendes Moment, die von der mindestens einen Bremsklappe erzeugt werden, auszugleichen.

## Revendications

1. Aéronef comprenant au moins un volet de freinage,
dans lequel ledit au moins un volet de freinage peut être étendu dans l'écoulement d'air autour de l' aéronef, et est agencé sur le fuselage de l' aéronef dans une région (16) sur les ailes de l'aéronef,
**caractérisé en ce que** ladite région (16) est une région dans laquelle un maximum local en ce qui concerne la pression d'air dynamique est présent, et **en ce que** ledit au moins un volet de freinage est positionné pour équilibrer un moment de tangage descendant et un moment de tangage ascendant, produit par ledit au moins un volet de freinage.

2. Aéronef selon la revendication 1, **caractérisé en ce que** deux, trois, quatre volets de freinage ou plus espacés les uns des autres dans la direction périphérique sont agencés sur le fuselage de l'aéronef dans une région sur les ailes de l'aéronef.

3. Aéronef selon la revendication 2, **caractérisé en ce que** les volets de freinage sont agencés selon une relation mutuellement symétrique dans la direction périphérique par rapport au plan central du fuselage.

4. Aéronef selon une des revendications 2 et 3, **caractérisé en ce que** les extrémités des volets de freinage, qui sont tournées dans la direction opposée au fuselage de l'aéronef, possèdent un bord droit.

5. Aéronef selon une des revendications 2 et 3, **caractérisé en ce que** les extrémités des volets de freinage, qui sont tournées dans la direction opposée au fuselage de l'aéronef, possèdent un bord dentelé, profilé, perforé ou arrondi.

6. Aéronef selon une des revendications précédentes, **caractérisé en ce que** ledit au moins un volet de freinage possède une forme sensiblement rectangulaire.

7. Aéronef selon une des revendications précédentes 2 à 6, **caractérisé en ce que** les volets de freinage peuvent être entraînés indépendamment les uns des autres.

8. Procédé de production de résistance aérodynamique sur un aéronef, dans lequel au moins un volet de freinage agencé sur le fuselage de l'aéronef dans une région (16), dans laquelle un maximum local en ce qui concerne la pression d'air dynamique est présent, sur les ailes de l'aéronef est étendu dans l'écoulement d'air autour de l'aéronef, dans lequel ledit au moins un volet de freinage est positionné pour équilibrer un moment de tangage descendant et un moment de tangage ascendant produit par ledit au moins un volet de freinage.
